Europäisches Patentamt

European Patent Office

Office européen des brevets

(11) Veröffentlichungsnummer: **0 139 918**
**A2**

(12) # EUROPÄISCHE PATENTANMELDUNG

(21) Anmeldenummer: **84109336.2**

(22) Anmeldetag: **07.08.84**

(51) Int. Cl.⁴: **F 03 D 5/02**

(30) Priorität: **25.08.83 DE 3347775**

(43) Veröffentlichungstag der Anmeldung:
**08.05.85** Patentblatt **85/19**

(84) Benannte Vertragsstaaten:
**CH DE FR GB IT LI SE**

(71) Anmelder: **MTU MOTOREN- UND TURBINEN-UNION MÜNCHEN GMBH**
**Dachauer Strasse 665 Postfach 50 06 40**
**D-8000 München 50(DE)**

(72) Erfinder: **Betz, Wolfgang, Dr.-Ing.**
**Grubmühlerfeldstrasse 15**
**D-8035 Gauting(DE)**

(54) **Strömungsmaschine, insbesondere gasbeaufschlagte Kraftmaschinen.**

(57) Bei einer Strömungsmaschine zur Umwandlung von Strömungsenergie in Nutzenergie sind im wesentlichen gleich ausgebildete Bauteile vorgesehen, die sich längs einer geschlossenen Umlaufbahn gleichsinnig bewegen. Die Umlaufbahn ist über zumindest zwei Umlenkrollen geführt oder durch diese festgelegt, wobei die Umlaufbahn und/oder die Bauteile im Umlenkbereich der Rollen in einem Kraftübertragungseingriff zu den Umlenkrollen stehen. Die Bauteile sind nach Art des Gasturbinenbaus als Kompaktschaufeln ausgebildet und besorgen im Betrieb bei einem Auftreten von Strömungsenergie einen Drehantrieb der Umlenkrollen, an denen beispielsweise ein Stromgenerator angekoppelt sein kann.

Fig.1

MTU MOTOREN- UND TURBINEN-UNION
MÜNCHEN GMBH

Strömungsmaschine, insbesondere
gasbeaufschlagte Kraftmaschinen

Die Erfindung betrifft eine Strömungskraftmaschine
zur Umwandlung von Strömungsenergie in Nutzenergie.

Strömungskraftmaschinen üblicher Bauart sind mit Bauteilen
ausgestattet, die zwecks Aufnahme der Strömungsenergie
sich auf einer Kreisbahn um eine Achse bewegen. Dies hat
den Nachteil, daß bei zu großen Einheiten sehr große
Fliehkräfte wirksam werden, die sowohl die statische als
auch die dynamische Festigkeit bzw. Charakteristik unter
Umständen stärker beeinträchtigen. Darüber hinaus ist
es von Nachteil, daß die Relativbewegung zwischen den
einzelnen Teilbereichen der Bauteile und dem strömenden
Medium sich fortwährend verändert, und zwar mit Abstand
von der Rotationsachse. Diesem Umstand muß bei der
Konzeption des Bauteils Rechnung getragen werden, mit
dem Ergebnis, daß strömungsgünstige Profile mit einem
hohen Wirkungsgrad einer Energieumsetzung zumeist eine
komplizierte Konfiguration aufweisen.

Es sind bereits Strömungsmaschinen (Kraftmaschinen) zur Umwandlung von STrömungsenergie des Wassers in Nutzenergie, wie elektrische Energie, bekannt geworden, mit an einem endlosen Band gleichsinnig fest montierten Schaufeln, das zwischen Unlenkungen (wenigstens zwei im Abstand zueinander parallelachsige Räder) so geführt ist, daß sowohl die vorlaufenden als auch die rücklaufenden Schaufeln angeströmt sind.

(DE-OS 31 39 802, DE-OS 26 48 812, GB-PS 403 607).

An einem endlosen Band fest montierte Schaufeln lassen sich so nicht verifizieren. Entweder benötigen sie besondere Steuereinrichtungen oder erfordern einen wohl kaum lösbaren Befestigungsaufwand.

Aufgabe der Erfindung ist eine Strömungsmaschine mit einem einfachen Aufbau und günstigem Wirkungsgrad zur Energieumwandlung zu schaffen bei der statische Festigkeitsprobleme praktisch keine Rolle spielen und sich eine gute dynamische Betriebscharakteristik einstellt, insbesondere im Hinblick auf Schwingung und Dämpfung.

Gelöst wird die der Erfindung zugrundeliegende Aufgabe dadurch, daß die aus der Strömungsmaschine kraftaufnehmenden und übertragenden Bauteile als Kompaktschaufeln ausgebildet sind, die lose in einer stationären Umlaufführung längs der Umlaufbahn verschieblich sind und dabei in einen Kraftübertragungseingriff mit Umlenkrollen bringbar sind.

Der Eingriff ist vorzugsweise auch formschlüssig.

Zweckmäßigerweise sind benachbarte Bauteile miteinander in gelenkiger Weise nach Art von Kettengliedern verbunden.

Besonders vorteilhaft ist es, wenn die Bauteile gleich ausgebildet sind.

Die Umlaufbahn verläuft zwischen den Umlenkrollen zumindest teilweise linear und parallel, so daß sich insgesamt ein kompakter Aufbau einer Strömungskraftmaschine ergibt und eine im Betrieb vorhandene Strömungsrichtung der Strömungsenergie (z.B. Gas) optimal ausgenützt wird, indem die Anströmrichtung der Kompaktschaufeln; z.B. durch vorgeschaltete Leitgitter, verändert wird. Die Anströmrichtung kann auch in anderer Weise wie an sich bekannt verändert werden. Die Umlaufführung ist mit Vorteil geteilt. Geringe Fliehkräfte und ein gutes Schwingungsverhalten stellen sich ein, wenn mindestens ein Teilbereich der Umlenkbahn nicht kreisrund in stetiger Weise ausgebildet ist oder mindestens zwei verschiedene Krümmungsmittelpunkte der Umlenkbahn besitzt.

Ein besonders günstiger Energieumsetzungswirkungsgrad stellt sich ein, weil die Bauteile praktisch im gesamten Umlaufbereich kraftübertragungswirksam einsetzbar sind.

Es sind lose Bauteile vorhanden, die in einer stationären Umlaufführung längs der Umlaufbahn verschieblich geführt werden. Das Bauteil ist eine Kompaktschaufel (nach Art des Gasturbinenbaus). Zweckmäßigerweise besteht das Bauteil aus Keramik. Eventuell vorhandene Führungsteile, Gehäuse ect. können ebenfalls der üblichen Technologie des Gasturbinenbaus entsprechen. Kraftübertragungsteile wie Antriebswellen, Kraftübertragungs-Umlenkrollen sind vorzugsweise aus Metall. Mithin kann durch die Erfindung eine einfach gestaltete Strömungskraftmaschine mit Hilfe einfacher Mittel hergestellt werden. Festigkeitsprobleme im statischen wie im dynamischen Bereich werden vermindert. Die Relativbewegung zwischen einzelnen Teilbereichen der Bauteile und dem durchströmenden Medium ändert sich nicht, was einfache strömungsgünstige Schaufeln zuläßt. Gleichwohl lassen sich durch die Erfindung gute Wirkungsgrade einer Energieumsetzung realisieren. Die Umlenkrollen stehen in einer festen Verbindung mit einer zentralen Achse, die sich unter Ausnutzung von Strömungsenergie, beispielsweise durch Gas, aber auch Wind oder Wasser, in Drehbewegung versetzen läßt. Die Antriebswelle kann direkt mit einem angeschlossenen Generatorsystem zwecks Erzeugung von elektrischer Energie gekoppelt sein.

Die Erfindung wird nachfolgend anhand zweier Ausführungsbeispiele unter Bezugnahme auf die Zeichnung näher erläutert; es zeigen:

Fig. 1 eine schematische Ansicht einer Strömungskraftmaschine, und

Fig. 2 eine Einzelheit der Strömungskraftmaschine nach Fig. 1.

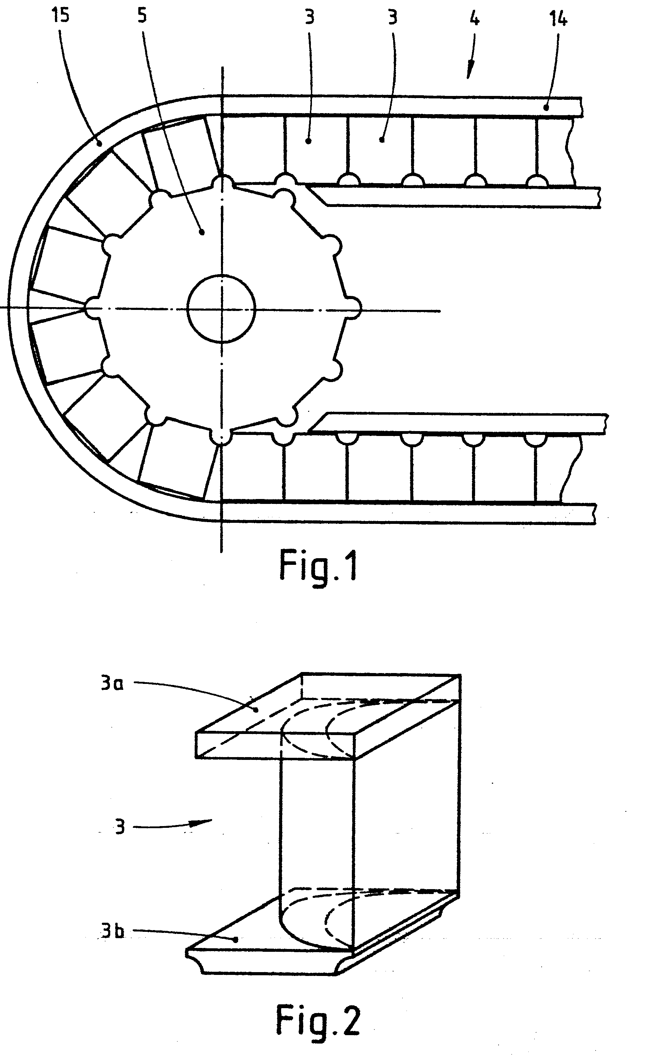

In den Figuren 1 und 2 ist ein Ausführungsbeispiel einer Strömungskraftmaschine 1 gezeigt, die im wesentlichen aus einer geschlossenen Umlaufbahn 4 für die im wesentlichen gleich ausgebildeten Bauteile 3 besteht.

Es sind z.B. unverbundene lose Bauteile 3 für die Aufnahme der Strömungsenergie vorgesehen, die längs der Umlaufbahn 4 in einer stationären Umlaufführung 14, 15 geführt sind. Die Umlaufführung 14 bestimmt hierbei die Bahn zwischen den Umlenkrollen und ist teilweise linear ausgebildet. Die sich anschließende Umlaufführung 15, weist äußere Kreisbögen im Bereich der Umlenkrollen auf, so daß aufgrund der Innenführung des Kreisbogens eine Umlenkung der Bauteile 3 an den Umlenkrollen erfolgt. Die Teile der stationären Umlaufführung sind in ihren Dimensionen vom Fachmann beliebig wählbar und zusammensetzbar bzw. zuzuordnen.

Die Bauteile 3 weisen innenseitig Ausnehmungen auf, die mit auf dem Umfang verteilten Nocken der Umlenkrollen in Eingriff bringbar sind, um ein Drehmoment an den Rollen zu erzeugen. Auch andere bekannte kraft- und/oder formschlüssige Eingriffe kann der Fachmann hier anwenden.

Ein einzelnes Bauteil 3 ist in Fig. 2 in größerer Einzelheit dargestellt. Es ist in Form einer Kompaktschaufel ausgebildet, die ober- und unterseitig Führungsansätze 3a, 3b in Quaderform aufweist. Die Führungsansätze sind zusammen mit der eigentlichen Kompaktschaufel einstückig ausgebildet und bestehen im dargestellten Ausführungsbeispiel aus Keramik, z.B. aus SiC. Antriebswelle und kraftübernehmende Umlenkrollen sind vorzugsweise aus Metall gefertigt.

Gehäuse, Führungsteile, Laufschaufeln, Leitschaufeln, Kraftübertragungsteile wie Getriebe, Steuerung, Regelung u.a. Teile entsprechen der üblichen Technologie des Gasturbinenbaus, einschließlich des Generators zur Erzeugung elektrischen Stroms und dessen Weiterleitung und/oder Speicherung mit bekannten Mitteln.

6

MTU MOTOREN- UND TURBINEN-UNION
MÜNCHEN GMBH

P a t e n t a n s p r ü c h e

1. Strömungsmaschine zur Umwandlung von Strömungsenergie, in Nutzenergie mit aneinandergereihten Schaufeln die zwischen Umlenkungen derart geführt sind, daß sie wenigstens teilweise lineare Bahnen beschreiben und während Vor- und Rücklauf vom Strömungsmedium beaufschlagt werden und dabei um $180^{\circ}$ umgelenkt werden, dadurch gekennzeichnet, daß die aus der Strömungsenergie kraftaufnehmenden und übertragenden Bauteile (3) als Kompaktschaufeln ausgebildet sind, die lose in einer stationären Umlaufführung (14,15) längs der Umlaufbahn (4) verschieblich sind und dabei in einen Kraftübertragungseingriff mit Umlenkrollen bringbar sind;

2. Strömungsmaschine nach Anspruch 1, dadurch gekennzeichnet, daß die Bauteile (3) in einen formschlüssigen Kraftübertragungseingriff mit dem Umfang der Umlenkrollen bringbar sind.

3. Strömungsmaschine nach Anspruch 1 oder 2, dadurch gekennzeichnet, daß benachbarte Bauteile (3) miteinander in gelenkiger Weise verbunden sind.

4. Strömungsmaschine nach einem der vorhergehenden Ansprüche, dadurch gekennzeichnet, daß die Bauteile (3) alle gleich ausgebildet sind.

5. Strömungsmaschine nach einem der vorhergehenden Ansprüche, dadurch gekennzeichnet, daß die Bauteile (3) aus einem auf die Temperatur des Strömungsmediums abgestimmten Werkstoffe bestehen.

6. Strömungsmaschine nach Anspruch 5, dadurch gekennzeichnet, daß die Bauteile (3) aus einem Keramikwerkstoff bestehen.

7. Strömungsmaschine nach einem der vorhergehenden Ansprüche, dadurch gekennzeichnet, daß den Bauteilen (3) in ihrer stationären Umlaufführung (14,15) Leitgitter vorgeschaltet sind.

8. Strömungsmaschine nach einem der vorhergehenden Ansprüche, dadurch gekennzeichnet, daß die Umlaufführung (14,15) geteilt ist.

9. Strömungsmaschine nach einem der vorhergehenden Ansprüche, dadurch gekennzeichnet, daß die Umlenkrolle direkt mit einem elektrischen Generator gekoppelt ist.

0139918

15     5        3       3       4       14

Fig.1

3a

3

3b

Fig.2